# EUROPÄISCHE PATENTANMELDUNG

(11) **EP 0 526 447 A2**
(43) Veröffentlichungstag der Anmeldung: **03.02.1993**
(21) Anmeldenummer: 92890166.9
(22) Anmeldetag: 10.07.1992
(51) Int. Cl.: H04M 15/34

(54) **Digitale Nebenstellenanlage mit Weitergabe der Gebühreninformation an Endgeräte**

(30) Priorität: 12.07.1991 AT 1405/91
(71) Anmelder: SCHRACK TELECOM-AKTIENGESELLSCHAFT, A-1121 Wien (AT)
(72) Erfinder: Grill, Alexander, A-1232 Wien (AT)
(74) Vertreter: Gibler, Ferdinand, Dipl.Ing. Dr. techn.

(57) **Zusammenfassung**

Digitale Nebenstellenanlage mit Fernsprechgebührenübertragung mit einem einer Nebenstellenanlagen-Zentrale vorgeschalteten Amtsvorsatz, die über eine oder mehrere PCM30 Multiplexkanäle mit einer digitalen Vermittlugsanlage in einem ISDN-fähigen Netz verbunden ist. Um bei einer solchen Anlage Gebühreninformationen an Endgeräte weitergeben zu können, ist vorgesehen, daß der Amtsvorsatz (32) eine D-Kanal-Signale verarbeitende Schaltungsanordnung (36, 37, 38, 39, 58, 59) aufweist, die gegebenenfalls mit den an die Nebenstellenanlagen-Zentrale (31) angeschlossenen Endgeräten (34) verbindbar sind.

## Beschreibung

Die Erfindung bezieht sich auf eine digitale Nebenstellenanlage mit Fernsprechgebührenübertragung mit einem einer Nebenstellenanlagen-Zentrale vorgeschalteten Amtsvorsatz, die über eine oder mehrere PCM30 Multiplexkanäle mit einer digitalen Vermittlungsanlage in einem ISDN-fähigen Netz verbunden ist.

Bei Telefon-Nebenstellenanlagen, wie etwa in einem Krankenhaus, ist es wünschenswert, die von der Vermittlungsstelle übermittelten Gebühreninformation während eines aktiven Gespräches direkt bis zur Endeinrichtung zu übertregen.

Dies ist besonders dann notwendig, wenn die Endeinrichtung mit Münzautomaten oder mit Abrechnungssystemen für Wertkarten ausgestattet sind.

Bei herkömmlichen analogen Vermittlungsstellen und analogen Nebenstellenanlagen sind dazu im allgemeinen keine weiteren Maßnahmen erforderlich, da die analoge Nebenstellenanlage für die zur Übermittlung der Gebühreninformation dienenden Wechselspannungs-Impulse z.B. mit einer Frequenz von 12kHz oder 16kHz durchlässig ist.

Auch bei analogen Vermittlungsstellen und digitalen Nebenstellenanlagen sind verschiedene Lösungen bekannt. So kann etwa entsprechend der DE-OS 37 33 701 auf der Amtsseite der Nebenstellenanlagen-Zentrale ein Gebührenimpulsempfänger vorgesehen sein, der die von der Vermittlungsstelle über die Amtsleitung ankommenden Wechselspannungs-Gebührenimpulse, deren Frequenz außerhalb des Übertragungsbereiches der digitalen Nebenstellenanlage liegt, auswertet. Über einen Generator werden entsprechend den ankommenden Impulsen wiederum Wechselspannnungs-Impulse einer anderen Frequenz, z.B. 3,5kHz oder 3,7kHz, die übder die digitale Vermittlungsstelle noch ohne störende Dämpfung übertragen werden kann, in die Leitung eingespeist. In der Endeinrichtung empfängt eine Auswerteeinrichtung diese Impulse und formt sie jeweils zu Gebührenimpulsen um. Ein der Wechselspannungs-Impulsfrequenz angepaßtes Sperrfilter im Sprechübertragungsweg der Endeinrichtung macht die Wechselspannungs-Gebührenimpulse für den Teilnehmer fast unhörbar.

Die herkömmlichen Lösungen sind jedoch in Verbindung mit digitalen Vermittlungsstellen und digital betriebenen Amtsleitungen nicht anwendbar, da auf der Amtsseite keine 12/16kHz Gebühreninformationen zur Verfügung stehen.

Die Gebühreninformationen werden dabei vielmehr über Datenpakete auf einen eigenen Kanal des Multiplexanschlusses, dem D-Kanal, an die Nebemstellenanlage-Zentrale übertragen und üblicherweise dort verarbeitet.

Übliche Nebenstellenanlagen-Zentralen liefern für die Gebührenerfassung über eine Schnittstelle die aufgelaufene Gebühr für eine bestimmte Nebenstelle am Ende des Gespräches.

Dies ist besonders dann nicht zielführend, wenn die Gebühreninformation als "Gesprächsgebühr" während des Gesprächs am Endgerät direkt benötigt wird, um dort angezeigt und/oder von einer Wertkarte abgebucht zu werden, oder einen Münzautomaten zu steuern.

Ziel der Erfindung ist es, diese Nachteile zu vermeiden und eine Einrichtung der eingangs erwähnten Art vorzuschlagen, die es bei digitalen Vermittlungsstellen und digital betriebenen Amtsleitungen ermöglichen auch an den angeschlossenen Endgeräten die Gebühren auch während des Gespräches erfassen zu können.

Erfindungsgemäß wird dies dadurch erreicht, daß der Amtsvorsatz eine D-Kanal-Signale verarbeitende Schaltungsanordnung aufweist, die gegebenenfalls mit den an die Nebenstellenanlagen-Zentrale angeschlossenen Endgeräten verbindbar sind.

Auf diese Weise können die in den D-Kanal enthaltenen Gebühreninformationen in der in der die D-Kanal-Signale verarbeitenden Schaltungsanordnung ausgewertet und den Endgeräten zugeführt werden.

Dabei kann nach einem weiteren Merkmal der Erfindung vorgesehen sein, daß die D-Kanal-Signale verarbeitende Schaltungsanordnung durch einen D-Kanal-Monitor gebildet ist, dem in zumindest einer Übertragungsrichtung eine Interfaceeinrichtung vorgeschaltet ist und der ausgangsseitig mit einem Vergebührungsprozessor verbunden ist, der gegebenenfalls mit seinen Ausgängen mit den Endgeräten verbunden ist, wobei der D-Kanal-Monitor alle D-Kanal-Informationspakete auf einen Gebühren-Informationsteil, sowie auf die Zuordnung von Referenznummern steuernde Signale prüft und diese an den Vergebührungsprozessor weiterleitet, der gegebenenfalls ausgangsseitig mit den Endgeräten verbunden ist.

Durch diese Maßnahmen können die im D-Kanal ankommenden Gebühren-Informationsteile auf sehr einfache Weise ausgewertet und den entsprechenden Endgeräten, gegebenenfalls über separate, an den Vergebührungsprozessor angeschlossene Leitungen zugeleitet oder es kann die vom Vergebührungsprozessor ermittelte Vergebührungsinformationen durch den D-Kanal-Monitor in das Sprechsignal eingefügt werden. Dabei zeichnet sich diese Lösung durch einen geringen konstruktiven Aufwand aus.

Nach einem weiteren Merkmal der Erfindung kann vorgesehen sein, daß die D-Kanal-Signale verarbeitende Schaltungsanordnung durch einen D-Kanal-Separator und einen mit diesem in Serie geschalteten D-Kanal-Prozessor gebildet ist, die mit einer amtsseitigen Interfaceeinrichtung und einem Mischer verbunden sind, der über eine weitere Interfaceeinrichtung mit der Nebenstellenanlage-Zentrale verbunden ist, wobei der Mischer eingansseitig mit der amtsseitigen Interfaceeinrichtung über eine Filterschaltung und mit einem Signalgenerator verbunden ist.

Im D-Kanal-Separator wird aus dem an seinem Eingang anliegenden Zeitmultiplexsignal der Zeitschlitz des D-Kanals extrahiert und in paralleler Form an seinem Ausgang zur Verfügung gestellt. Der D-Kanal-Prozessor seinerseits verarbeitet den Inhalt des D-Kanals.

Beim Aufbau einer Verbindung werden Referenznummern der Verbindung und der Zeitschlitz, in dem die Sprach-Signale dieser Verbindung von der Vermittlungsstelle zur Nebenstellenanlage übertragen werden, von der Vermittlungsstelle der Nebenstellenanlage durch D-Kanal-Pakete übermittelt, vom D-Kanal-Prozessor ausgewertet und durch eine Eintragung etwa in einer internen Tabelle vermerkt. Der Zeitschlitz wird als belegt vermerkt und ein interner dem Zeitschlitz zugeordneter Gebührenakkumulator wird eingerichtet.

Dabei können alle während des Gespräches von der Vermittlungsstelle gesandten Gebührenmeldungen ebenfalls über die Interfaceeinrichtungen und den D-Kanal-Seperator an den D-Kanal-Prozessor weitergeleitet werden, der die darin enthaltene Referenznummer mit den den belegten Zeitschlitzen zugeordneten Referenznummern vergleicht.

Bei einer über dem im internen Gebührenakkumulator für den betreffenden Zeitschlitz liegenden Gebührenmeldung kann während einer festgelegten Impulsdauer über den Ausgang des D-Knal-Prozessors der Mischer aktiviert und der interne Gebührenakkumulator um eine Gebühreneinheit erhöht werden.

Im Mischer wird immer dann, wenn er vom D-Kanal-Prozessor aktiviert wird, statt des im Zeitschlitz entsprechenden Sprachsignal-Abtastwertes, der an seinem einen Eingang anliegt, der an seinem anderen Eingang anliegende vom Signalgenerator erzeugte Abtastwert eines Wechselspannungs-Impulssignales an seinen Ausgang durchgeschaltet.

In der Filterschaltung werden vor dem Mischvorgang alle Anteile bei der vom Signalgenerator erzeugten Frequenzen aus den ankommenden Sprachsignal-Abtastwerten entfernt werden, damit das Wechselspannungs-Impulssignal in den Endgeräten als Gebührenimpuls erkannt werden kann.

Dabei ist es möglich die Gebühreninformationen ohne separate Leitungen den Endgeräten zuzuführen, wodurch sich eine einfachere Verdrahtung ergibt.

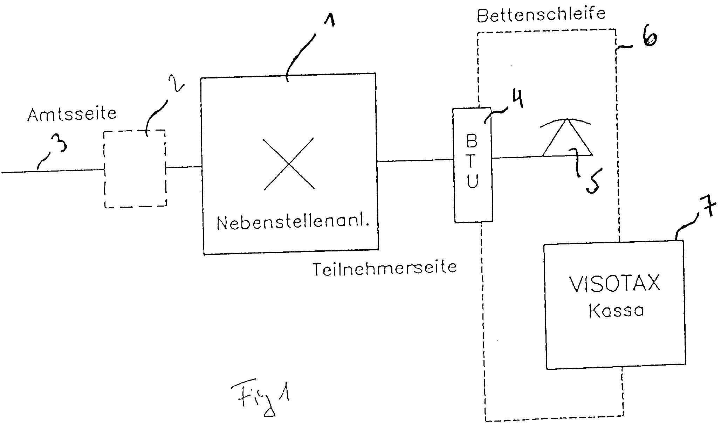

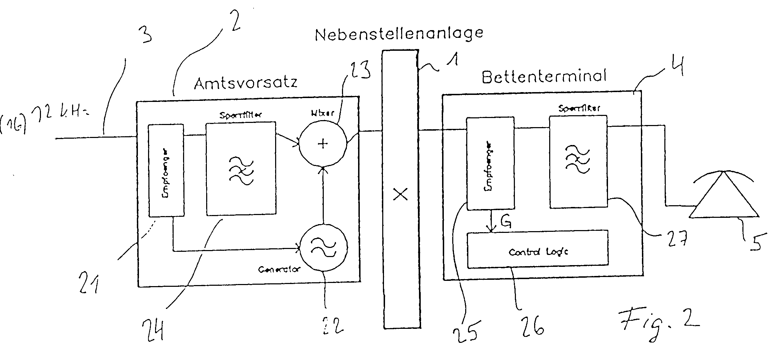

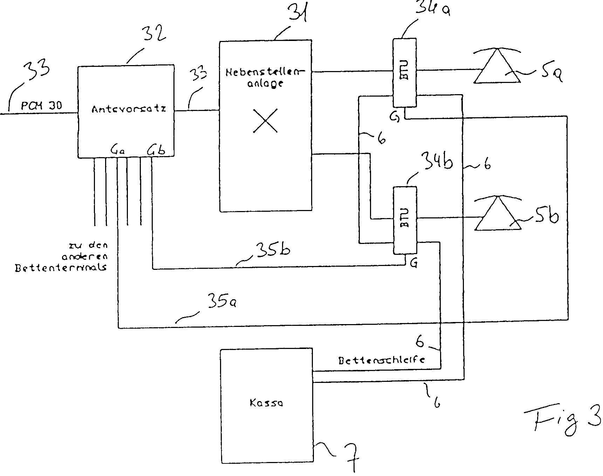

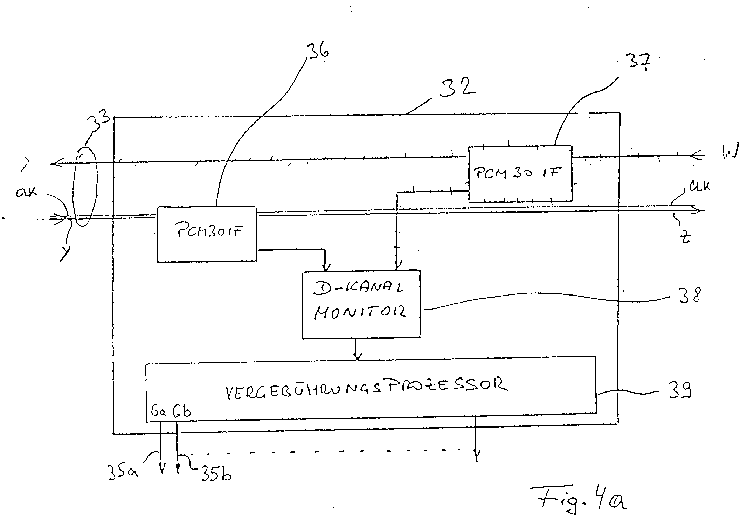

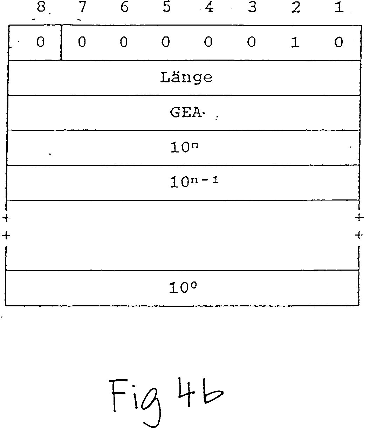

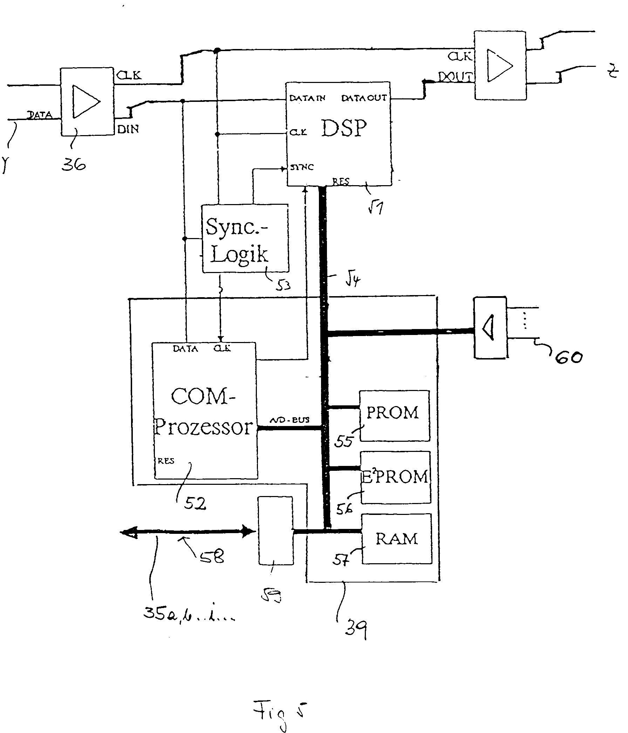

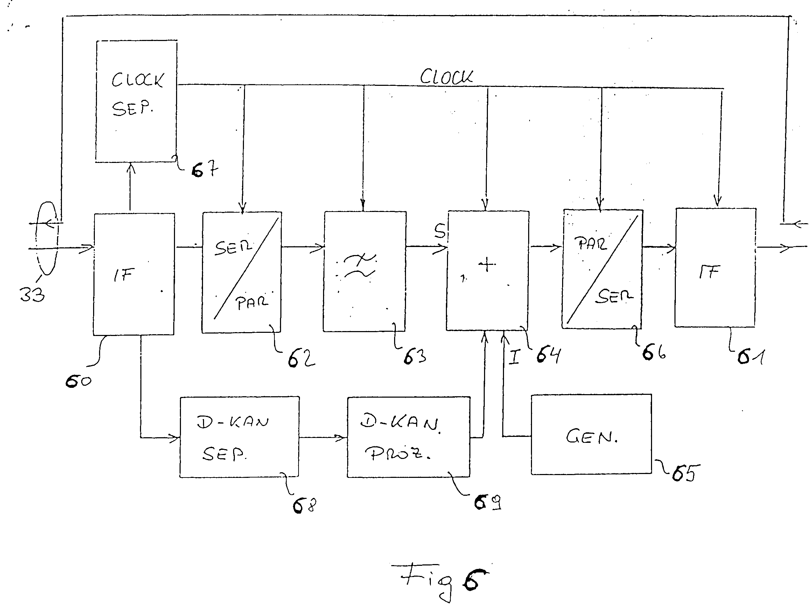

Die Erfindung wird nun anhand der Zeichnung näher erläutert. Es zeigt dazu die Fig.1 das Blockschaltbild einer Gesamtanordnung, Fig.2 eine herkömmliche Ausführung mit einer digitalen Nebenstellenanlage, Fig.3 zeigt eine Blockdarstellung einer erfindungsgemäßen Anordnung mit einer digitalen Nebenstellenanlage in einem ISDN-fähigen Netz, Fig.4a ein schematisches Blockschaltbild eines Amtsvorsatzes einer Anlage entsprechend Fig.3, Fig.4b den normgemäßen Aufbau einer Gebührenmeldung, Fig. 5 ein detailliertes Blockschaltbild eines Amtsvorsatzes und Fig. 6 eine Ausführung eines Amtsvorsatzes, wenn Vergebührungsinformationen ohne zusätzliche Leitungen an die Endgeräte übermittelt werden sollen.

Die Fig.1 zeigt ein Blockschaltbild einer Gesamtanordnung. Eine Nebenstellenanlagen-Zentrale 1 ist über einen Amtsvorsatz 2 über eine oder mehrere Amtsleitungen 3 mit der Vermittlungsstelle verbunden. An der Teilnehmerseite der Nebenstellenanlagen-Zentrale 1 sind (üblicherweise viele) Endeinrichtungen 4 (wie zum Beispiel Bettenterminals BTU's) angeschlossen. An die Endeinrichtungen 4 sind jeweils zum Beispiel Telefonapparate 5 angeschlossen. Die Endeinrichtungen können weiters über ein Netzwerk 6 miteinander und/oder einer Abrechnungszentrale 7 verbunden sein.

Die Fig. 2 zeigt die Ausgestaltung des Amtsvorsatzes und des Bettenterminals bei einer digital en Nebensstellenanlage herkömmlicher Bauart.

Der Amtsvorsatz 2 ist mit einem Empfänger 21 ausgestattet, der die über die Amtsleitung(en) 3 in Form von 16 kHz oder 12 kHz Wechselspannungs-Impulsen (Bursts) ankommenden Zählimpulsinformationen in Steuerimpulse für einen Generator 22 umsetzt, der entsprechend den ankommenden Zählimpulsen über einen Mischer 23 Wechselspannungsimpulse einer anderen Frequenz, wie zB 3,5 kHz oder 3,7 kHz in die Leitung einspeist.

Ein Sperrfilter 24 verhindert einerseits, daß im Sprachband Frequenzanteile im Frequenzbereich der vom Generator 22 erzeugten Wechselspannungs-Impulse von der Amtsseite zur Nebenstellenanlagen-Zentrale gelangen können und andererseits, daß das vom Generator 22 erzeugte Signal in Richtung Amt gelangen kann. Das vom Generator 22 erzeugte Signal liegt zwar über dem geforderten Durchlaßbereich, wird aber auch von digitalen Nebenstellenanlagen noch ausreichend ungedämpft übertragen (typisch -12dB).

In der an die Nebenstellenanlagen-Zentrale 1 angeschlossenen Endeinrichtung 4 wird in einer Empfangseinrichtung 25 der vom Generator 22 erzeugte Wechselspannungs-Impuls empfangen und in einen Gebührenimpuls umgeformt mit welchem eine Steuerlogik 26 beaufschlagt wird, welche schließlich die Vergebührung im Endgerät auslöst.

Ein im Sprachkreis zwischen der Empfangseinrichtung 25 und dem an die Endeinrichtung angeschlossenen Teilnehmerapparat 5 angeordnetes Sperrfilter unterdrückt die vom Generator 22 erzeugte Frequenz und macht die Wechselspannungs-Gebührenimpulse für den Teilnehmer fast unhörbar.

Die Fig.3 zeigt eine Blockdarstellung einer erfindungsgemäßen Anordnung mit einer digitalen Nebenstellenanlagen-Zentrale 31, welcher amtsseitig ein Amtsvorsatz 32 vorgeschaltet ist, und welche über eine oder mehrere PCM30 Multiplexkanäle mit einer digitalen Vermittlungsanlage in einem ISDN-fähigen Netz verbunden ist.

Teilnehmerseitig sind an die Nebenstellenanlagen-Zentrale 31 Endgeräte 34a, b z.B. Bettenterminals angeschlossen, an welche wiederum die Teil nehmerapparate 5a, b usw angeschlossen sind. Die Endgeräte 34a, b usw sind über ein Netzwerk 6 miteinander und/oder mit einer Abrechnungszentrale 7 verbunden. Die Endgeräte 34 weisen weiters einen Gebühreneingang G auf und sind dann über je eine Gebührenleitung 35a,b usw mit je einem jedem Endgerät zugeordneten Gebührenaus gang Ga, b usw des Amtsvorsatzes 32 verbunden.

Zur besseren Erläuterung der Anordnung gemäß Fig.3 zeigt die Fig.4a ein schematisches und Fig. 5 ein detaillierteres Blockschaltbild des Amtsvorsatzes 32. Der amtsseitige PCM30 Multiplexkanal 33 besteht aus zwei unidirektionalen Datenleitungen yz und wx jeweils mit zugehörigem Taktpfad und wird, zumindest in einer, gegebenenfalls in jeder Datenrichtung jeweils durch eine Interfaceeinrichtung 36 bzw. 37 abgetastet und an die Nebenstellenanlagen-Zentrale durchgeschaltet. Die gegebenenfalls vorhandene Interfaceeinrichtung 37 für den Datenpfad wx ist in Fig. 4a strichliert dargestellt. An Ausgängen der Interfaceeinrichtungen ist ein D-Kanal-Monitor 38 angeschlossen, dessen Ausgang mit dem Eingang eines Vergebührungsprozessors 39 verbunden ist. Aufgabe des D-Kanal-Monitors ist es, die im D-Kanal vorhandene Gebühreninformation, die entweder als Summe der bisher aufgelaufenen Gebühren oder als Tarif/Zoneninformation vorhanden ist, zu erkennen. Weiters ist der D-Kanal-Monitor dazu vorgesehen zu entscheiden, ob für diesen Verbindungskanal eine Vergebührungsinformation an ein Endgerät weitergegeben werden muß.

Der D-Kanal-Monitor 38 besteht im wesentlichen aus einer Einrichtung zur Umwandlung des seriellen Datenstroms auf ein paralleles Format einer Erkennungseinrichtung, die den Anfang und das Ende einer Meldung erkennt, einer Einrichtung, die das richtige Format einer Meldung überprüft, z.B. eine Fehlererkennung über eine Checksumme, einer Einrichtung, die erkennt, ob es sich bei der Meldung um eine Gebühreninformation handelt, einer Einrichtung, die die Gebühreninformation dem richtigen Übertragungs kanal zuordnet. Diese Einrichtungen können nach dem detaillierten Blockschaltbild nach Fig. 5 durch einen Signalprozessor 51, z.B. der Type INTEL 8044, gebildet sein. Nach dieser Ausführungsform umfaßt der Vergebührungsprozessor 39 eine µP 52, z.B. der Type MOTOROLA 56000. Die Daten des Signalpfades yz liegen an beiden Prozessoren 51, 52 an. Der Signalprozessor 51 wird von dem den Signalpfad begleitenden Taktpfad getaktet; zur gegenseitigen Synchronisation des µP 52 und des Signalprozessors 51 ist zwischen diesen eine Synchronisationslogik 53 angeordnet. Über den Datenbus 54, an dem ein PROM 55, ein E² PROM 56 und ein RAM 57 angeschlossen sind, erfolgt das Datenmanagement zwischen 51 und 52. Im PROM 55 ist das Steuerprogramm für die Prozessoren 51 und 52 abgelegt; das E² PROM beinhaltet Konfigurationsdaten (z.B. Benutzung von 5 oder 7 Kanälen) das Nachrichten- bzw. Gebührenprotokoll z.B. gemäß Fig. 3, oder dgl. Der RAM 57 ist der Arbeitsspeicher, in welchem die vom µP 52 ermittelten Gebührenimpulse abgelegt werden. Die Ermittlung der Gebührenimpulse durch den µP 52 kann je nach der Art der Gebühreninformation durch Bildung der Differenz aus der Anzahl der schon abgegebenen Zählimpulse und der protokollgemäßen Summe der Information und Ermittlung der noch fehlenden Gebührenimpulse bestehen, oder, wenn die Gebühreninformation aus einer Tarif- und/oder Zoneninformation besteht, diese in einen Impulsabstand umrechnet und, solange das Gespräch dauert, Impulse im richtigen Zeitabstand generiert. An der Schnittstelle 58 können Ausgänge 35a, b... i... mit der Gebühreninformation aus dem RAM 57 bedient werden, wobei diese Gebühreninformation über zusätzliche an die Ausgänge 35a, b... i..., gegebenenfalls unter Zwischenschaltung einer Treiberstufe 59, angeschlossene Leitungen an die Endeinrichtungen 34a, b... i... der Nebenstellenanlage 31 übermittelt werden.

Alternativ kann aber, um diese gesonderten Leitungen einzusparen, die Gebührenimpulseinformation durch den Signalprozessor 51 selbst in den Sprachkanal yz eingefügt werden. Die Gebührenimpulsinformation liegt über dem Datenbus 54 am Signalprozessor 51 an bzw. kann vom Signalprozessor aus dem RAM 57 ausgelesen werden, wobei dieses Einfügen entweder dadurch erfolgen kann, daß die Gebühreninformation in einen Impuls einer Frequenz oder eines Frequenzgemisches umgewandelt wird oder die Gebühreninformation als serieller Datenstrom entweder z.B. als FSK-Signal oder durch Manipulation ausgewählter Bits der Sprachsamples kodiert wird. In beiden Fällen kann solcherart die Gebührenimpulsinformation über die Nebenstellenanlage übertragen werden.

Werden die Gebührenimpulse durch eine Form der Frequenzkodierung über die Nebenstellenanlage übertragen, muß sichergestellt werden, daß durch ein Eingangssignal im Sprechkanal die Gebühreninformation nicht nachgebildet werden kann. Zu diesem Zweck müssen alle Frequenzanteile, die für die Gebührenübertragung verwendet weden sollen, vorher aus dem Sprachkanal entfernt werden. Dann erst kann die Gebühreninformation in geeigneter Form in den Sprachkanal eingefügt werden.

Im Endgerät wird die eingefügte Information wieder in eine für die Abrechnungseinheit verarbeitbare Form umgewandelt und anschließend aus dem Sprachband entfernt, um sie für den Teilnehmer unhörbar zu machen. Bei digitalen Eingangssignalen (PCM) kann die Aufgabe des Entfernens von Frequenzen aus dem Sprachkanal ein digitaler Signalprozessor übernehmen. Dieser Prozessor filtert durch n-stufige Algorithmen (rekursive und/oder nicht rekursive) über Rechenoperationen, die auf die PCM-Werte des betrachteten Kanals angewandt werden, unerwünschte Anteile heraus.

Nach Anweisung des Gebührenprozessors kann derselbe Signalprozessor z.B. über Tabellen und andere mathematische Funktionen eine oder mehrere Frequenzen für bestimmte Zeitfolgen dem betrachteten Sprachkanal zumischen.

Werden zur seriellen Übertragung diskrete Frequenzen im Sprachkanal verwendet, gilt vorstehendes gleichermaßen.

Bei einer Kodierung durch die Manipulation von einzelnen Bits muß ebenfalls verhindert werden, daß eine einlangende Bitfolge die Gebühreninformation nachbildet. Die Bearbeitung der Bits kann in diesem Fall ohne Filterfunktion nur durch entsprechendes Setzen in der richtigen zeitlichen Folge geschehen.

Der richtige Empfang der HDLC-kodierten Meldungen wird durch den µP 52 unterstützt. Dadurch steht die Meldung fehlerkorrigiert bereits in paralleler Form im µP 52 für die Weiterverarbeitung, z.B. zur Abspeicherung im RAM 57, zur Verfügung.

Im Kopfteil der Meldung ist auch die betreffende Kanalnummer enthalten. Über parallele Eingänge 60 z.B. gesteuert über Schalter o.ä. oder eine Programmierung in einem Speicher werden jene Kanäle ausgewählt, für die eine Gebühreninformation überhaupt angenommen werden soll. Die empfangene Kanalnummer wird mit den zulässigen Kanalnummern im µP 52 verglichen und, wenn gültig, für die Weiterverarbeitung angenommen.

Die Meldung enthält als nächstes die Form der Gebühreninformation, die entweder als Summe der bereits für diese Verbindung aufgelaufenen Gebühr oder als Tarif bzw. Verzonungsinformation am Beginn der Verbindung angeboten wird. Daher sind in der Folge zwei verschiedene Funktionsweisen möglich:
So kann die Gebühreninformation eine Summeninformation sein. In diesem Fall stellt zu Beginn des Gesprächs ein Gebührenrechner einen intern geführten Gebührenzähler auf Null. Die erste Gebühreninformation liefert daher eine positive Differenz, der Wert wird an die Ausgabeeinheit, z.B. einen angeschlossenen Signalprozessor, als Zahl der aus zugebenden Zählimpulse weitergegeben. Danach wird der interne Gebührenzähler auf den neuen Stand gebracht. Solange das Gespräch dauert, wird auf diese Weise die Differenz zwischen einlangendem und internem Zählerstand an das Endgerät übertragen.

Die Vergebührungsinformation kann aber auch eine Tarifinformation o.ä. sein. In diesem Fall kann aus der einlangenden Vergebührungsinformation der Gebührenrechner den notwendigen zeitlichen Abstand der zu übertragenden Gebührenimpulse errechnen. Solange die Verbindung besteht, werden diese Impulse annähernd äquidistant an ein Endgerät übertragen.

Steht zur Übertragung ein serieller Kanal zum Endgerät zur Verfügung, der mehr als nur einen Impuls übertragen kann, so wird eine Verzonungs information über das Ausgabegerät direkt an das Endgerät geschickt, das dann die Vergebührung in regelmäßigen Abständen übernimmt.

Die Funktion des Meldungsempfanges, der Verifizierung und der Weitergabe an die Ausgabeeinrichtung erfolgt durch den µP 52.

Im digitalen ISDN werden vermittlungstechnische Informationen durch Informationspakete im D-Kanal übertragen. Da ein D-Kanal für mehrere Nachrichtenkanäle Verwendung findet, wird beim Aufbau eines Nachrichtenkanals diesem Kanal eine Referenznummer zugeordnet und diese Referenznummer in jedem D-Kanal -Informationspaket, das den entsprechenden Nachrichtenkanal betrifft, mitübertragen. Beim Abbau einer Verbindung wird schließlich die der Verbindung zugeordnete Referenznummer wieder freigegeben.
Über das Interface 36 bzw. 37 wird der D-Kanal der zugehörigen Übertragungsrichtung an den D-Kanal-Monitor 38 durchgeschaltet. Die Schaltungstechnik der Interfaceeinrichtungen ist aus der digitalen Vermittlungstechnik bekannt, es ist dabei ein bestimmter Zeitschlitz (der Zeitschlitz 16) aus dem Zeit-Multiplexkanal auszuwählen und an den Ausgang durchzuschalten

In dem D-Kanal-Monitor 38 werden alle D-Kanal-Informationspakete daraufhin untersucht, ob sie entweder einen Gebühren-Informationsteil aufweisen, oder ob sie der Zuordnung einer Referenznummer oder der Rückgabe einer Referenznummer dienen und bei Zutreffen eines der Merkmale wird die Meldung an den Vergebührungsprozessor weitergeleitet.

Die Fig. 4b zeigt dabei den normgemäßen Aufbau eines im D-Kanal -Informationspaket enthaltenen Gebührenprotokolls entsprechend 1 TR 6, Paragraph 3, 2, 3.4, 5.4 der deutschen Bundespost. Alternativ kann das Gebührenprotokoll entsprechend den ETSI -Bestimmungen aufgebaut sein. Nach einer Kennung wird die Länge der Meldung, gefolgt von einem Oktett GEA, in dem die Art der Gebühreninformation codiert ist, und schließlich die Folge der einzelnen Stellen des Gebührenwertes übertragen.

Will nun etwa ein Teilnehmer, der eines der an die Nebenstellenanlagen-Zentrale 31 angeschlossenen Endgeräte (35a,b usw) benutzt, ein Telefongespräch führen, so wird beim Verbindungsaufbau zwischen der Nebenstellenanlage und der Vermittlungsstelle eine neue Referenznummer vergeben; es ist in dem entsprechenden D-Kanal-Informationspaket auch die Rufnummer und damit die Endgerätenummer des rufenden Teilnehmers enthalten. Beide Nummern werden von dem D-Kanal-Monitor an den Vergebührungsprozessor 39 weitergeleitet.

Im Vergebührungsprozessor 39 wird daraufhin ein Eintrag etwa in einer Tabelle derart durchgeführt, daß das entsprechende Endgerät belegt erscheint und daß das eben angesprochene Endgerät durch die entsprechenden Referenznummer kodiert ist. Außerdem wird ein dem Endgerät zugeordneter Gebührenakkumulator eingerichtet.

Alle während des Gesprächs von der Vermittlungsstelle gesandten Gebührenmeldungen werden über die Interfaceeinrichtung 36 und den D-Kanal-Monitor 38 ebenfalls an den Vergebührungsprozessor 39 weitergeleitet, der die darin enthaltene Referenznummer mit den den belegten Endgeräten zugeordneten Referenznummern vergleicht und im Fall der Übereinstimmung an dem dem Endgerät mit der entsprechenden Referenznummer zugeordneten Ausgang (Ga,b usw) einen Gebührenimpuls an das entsprechende Endgerät abgibt und außerdem den dem Endgerät zugeordneten Gebührenakkumulator um einen dem Gebührenimpuls entsprechenden Gebührenwert erhöht.

Weiters werden die in der Gebührenmeldung ausgewiesenen bisher aufgelaufenen Gebühren der Nachrichtenverbindung mit den im entsprechenden Gebührenakkumulator aufsummierten, vom Endgerät in irgendeiner Weise dem Teilnehmer verrechneten Gebühren verglichen und, falls die Gebührenmeldung bereits höhere Gebühren ausweist, solange zusätzliche Gebührenimpulse ausgegeben bis Übereinstimung hergestellt ist.

Erscheint im D-Kanal schließlich ein Informationspaket mit einer Meldung, die den Abbau einer Verbindung und die Rückgabe der zugeordneten Referenznummer mitteilt, so wird auch diese Meldung an den Vergebührungsprozessor übermittelt, wo die Zuordnung zwischen Referenznummer und Endgerät gelöscht wird.

Als Endgeräte einer Anlage entsprechend der Fig.3 können zum Beispiel herkömmliche Endgeräte 4 entsprechend Fig.2 Verwendung finden, welche allerdings mit einem nach Außen geführten Gebührenimpulseingang G ausgestattet sein müssen. Weiters können der Empfänger 25 und das Sperrfilter 27 entfallen.

Die Fig. 5 zeigt eine detailliertere Darstellung einer Ausgestaltung eines Amtsvorsatzes 32, wenn die Vergebührungsinformationen ohne zusätzliche Leitungen 35a,b usw. an die Endgeräte übermittelt werden sollen.

Die Fig. 6 zeigt eine erfindungsgemäße Ausgestaltung eines Amtsvorsatzes in diskreter Technik, bei welcher die Gebühreninformation gleichfalls in den Sprachkanal eingefügt wird und sich demnach zusätzliche Leitungen für die Übertragung der Gebühreninformation zur Nebenstellenanlage erübrigen.

Je eine Interfaceeinrichtung 60, 61 stellt die Schnittstelle einerseits zur Amtsseite und andererseits zur Nebenstellenanlagen-Zentrale dar. In den Interfaceeinrichtungen werden insbesondere Kodeumwandlungen vom HDB3 codierten PCM30 Multiplexkanal 33 zu dem im Amtsvorsatz intern verwendeten NRZ Code und wieder zurück in den HDB3 Code (für die Verbindungsleitung zur Nebenstellenanlagen-Zentrale) in an sich bekannter Weise durchgeführt.

Der Ausgang der Interfaceeinrichtung 60 ist mit dem Eingang eines Seriell/Parallel-Wandlers 62 verbunden, dessen Ausgangs-signal über eine Filterschaltung 63 an einen ersten Eingang S eines Mischers 64 geführt ist. An einem weiteren Eingang I des Mischers liegt das Ausgangssignal eines Tongenerators 65, der ein Wechselspanungssignal einer festgelegten Frequenz wie zum Beispiel 3. 7 kHz erzeugt, an. Das Ausgangssignal des Mischers wird in einem Parallel/Seriell-Wandler 66 serialisiert und über die Interfaceeinrichtung 61 zur Nebenstellenanlagen-Zentrale weitergeleitet.

Die Interfaceeinrichtung 60 stellt an einem weiteren Ausgang ein Steuersignal für einen Taktseparator 67 zur Verfügung, der aus dem ankommenden PCM30-Signal den Takt extrahiert, mit dem alle Baugruppen des Amtsvorsatzes synchron zum ankommenden Signal getaktet werden.Damit braucht man im Amtsvorsatz keine elastischen Speicher zum Schlupfausgleich.

Ein weiterer Ausgang der Interfaceeinrichtung 60 ist mit dem Eingang eines D-Kanal-Separators 68 verbunden, dessen Ausgang an einen D-Kanal-Prozessor 69 geführt ist. Im D-Kanal-Separator wird aus dem an seinem Eingang anliegenden Zeitmultiplexsignal der Zeitschlitz des D-Kanals (Zeitschlitz mit der Nummer 16 beim PCM30 System) extrahiert und in paraller Form an seinem Ausgang zur Verfügung gestellt. Der D-Kanal-Prozessor seinerseits verarbeitet den Inhalt des D-Kanals in ähnlicher Weise wie bereits für die Kombination aus D-Kanal-Monitor 38 und Vergebührungsprozessor 39 bei der Fig.4a beschrieben.

Bei Aufbau einer Verbindung werden die Referenznummer der Verbindung und der Zeitschlitz, in dem die Sprach-Signale dieser Verbindung von der Vermittlungsstelle zur Nebenstellenanlage übertragen werden, von der Vermittlungsstelle der Nebenstellenanlage durch D-Kanal-Pakete übermittelt, vom D-Kanal-Prozessor ausgewertet und durch einen Eintrag etwa in einer internen Tabelle vermerkt. Der Zeitschlitz wird als belegt vermerkt und ein interner dem Zeitschlitz zugeordneter Gebührenakkumulator wird eingerichtet.

Alle während des Gesprächs von der Vermittlungsstelle gesandten Gebührenmeldungen werden ebenfalls über die Interfaceeinrichtung 60 und den D-Kanal-Separator 68 an den D-Kanal-Prozessor 69 weitergeleitet, der die darin enthaltene Referenznummer mit den den belegten Zeitschlitzen zugeordneten Referenznummern vergleicht.

Weist die Gebührenmeldung dabei einen höheren Gebührenwert aus, als im internen Gebührenakkumulator für den betreffenden Zeitschlitz vermerkt ist, so wird während einer festgelegten Impulsdauer und nur für den betreffenden Zeitschlitz über den Ausgang des D-Kanal-Prozessors der Mischer 54 aktiviert und der interne Gebührenakkumulator um eine Gebühreneinheit erhöht; dies geschieht so oft, bis Gleichstand zwischen der in der Gebührenmeldung des D-Kanals ausgewiesenen Gebühr und den intern im Gebührenakkumulator aufsummierten Gebühreneinheiten herrscht.

Im Mischer 64 wird immer dann, wenn er vom D-Kanal-Prozessor aktiviert wird, statt des dem Zeitschlitz entsprechenden Sprachsignal-Abtastwertes, der an seinem Eingang S anliegt, der an seinem I Eingang anliegende vom Signalgenerator 55 erzeugte Abtastwert eines Wechselspannungs-Impulssignals an seinen Ausgang durchgeschaltet.

Für die konstruktive Ausführung ist sowohl eine getrennte Realisierung von Mischer und Signalgenerator in digitaler Technikals auch die gemeinsame Realisierung unter Verwendung von Festwertspeichern, in denen Tabellen abgelegt sind, möglich.

In der Filterschaltung 63 müssen, weil das Wechselspannungs-Impulssignal in den Endgeräten als Gebühreni mpuls erkannt werden soll, vor dem Mischvorgang alle Anteile bei der vom Signalgenerator erzeugten Frequenz aus den ankommenden Sprachsignal-Abtastwerten entfernt werden. Dies wird entsprechend dem Stand der Technik für mehrere Zeitschlitze gemeinsam in einem digitalen Signalprozessor durchgeführt. Die dazu notwendigen Algorithmen sind aus der digitalen Signalverarbeitung wohlbekannt.

Die Wechselspannungs-Impulssignale werden in dem dem betreffenden Zeitschlitz zugeordneten, an die Nebenstellenanlagen-Zentrale angeschlossenen Endgerät in einer Empfangseinrichtung, welche auf die Tonfrequenz des Signalgenerators 55 abgestimmt ist, emfangen und in einen Gebührenimpuls umgeformt.

Damit ist in bekannter Weise die Vergebührung eines Telefongesprächs im Endgerät möglich.

Das Endgerät kann dabei ein Blockschaltbild wie bereits in Fig. 2 für ein bekanntes Endgerät 4 angegeben aufweisen. Allerdings liegt das Sprachsignal nicht in analoger Form sondern digital als PCM Signal vor und ist in einer aus der PCM-Technik bekannten Art zu verarbeiten.

Erscheint im D-Kanal schließlich ein Informationspaket mit einer Meldung, die den Abbau einer Verbindung und die Rückgabe der zugeordneten Refernznummer mitteilt, so wird auch diese Meldung vom D-Kanal-Prozessor ausgewertet und die Zuordnung zwischen Referenznummer und Zeitschlitz gelöscht und der Zeitschlitz als unbenutzt markiert.

## Patentansprüche

1. Digitale Nebenstellenanlage mit Fernsprechgebührenübertragung mit einem einer Nebenstellenanlagen-Zentrale vorgeschalteten Amtsvorsatz, die über eine oder mehrere PCM30 Multiplexkanäle mit einer digitalen Vermittlungsanlage in einem ISDN-fähigen Netz verbunden ist, **dadurch gekennzeichnet,** daß der Amtsvorsatz (32) eine D-Kanal-Signale verarbeitende Schaltungsanordnung (36, 37, 38, 39, 58, 59) aufweist, die gegebenenfalls mit den an die Nebenstellenanlagen-Zentrale (31) angeschlossenen Endgeräten (34) verbindbar sind.

2. Nebenstellenanlage nach Anspruch 1, **dadurch gekennzeichnet,** daß die D-Kanal-Signale verarbeitende Schaltungsanordnung durch einen D-Kanal-Monitor (38) gebildet ist, dem in zumindest einer Übertragungsrichtung eine Interfaceeinrichtungen (36 und/oder 37) vorgeschaltet ist und der ausgangsseitig mit einem Vergebührungsprozessor (39) verbunden ist, der gegebenenfalls mit seinen Ausgängen mit den Endgeräten (34) verbunden ist, wobei der D-Kanal-Monitor (38) alle D-Kanal-Informationspakete auf einen Gebühren-Informationsteil, sowie auf die Zuordnung von Referenznummern steuernde Signale prüft und diese an den Vergebührungsprozessor (39) weiterleitet, der gegebenenfalls ausgangsseitig mit den Endgeräten (34) verbunden ist.

3. Nebenstellenanlage nach Anspruch 1, **dadurch gekennzeichnet,** daß die D-Kanal-Signale verarbeitende Schaltungsanordnung durch einen D-Kanal-Separator (68) und einen mit diesem in Serie geschalteten D-Kanal-Prozessor (69) gebildet ist, die mit einer amtsseitigen Interfaceeinrichtung (60) und einem Mischer (64) verbunden sind, der über eine weitere Interfaceeinrichtung (61) mit der Nebenstellenanlage-Zentrale (31) verbunden ist, wobei der Mischer (64) eingangsseitig mit der amtsseitigen Interfaceeinrichtung (60) über eine Filterschaltung (63) und mit einem Signalgenerator (65) verbunden ist Fig. 6).
